# EUROPEAN PATENT SPECIFICATION

(11) **EP 3 492 534 B1**
(45) Date of publication and mention of the grant of the patent: **11.09.2024**
(21) Application number: 17834497.4
(22) Date of filing: 27.07.2017
(51) Int. Cl.: C09D 7/40, B41M 5/337

(54) **RESIN COMPOSITION AND METHOD FOR PRODUCING SAID RESIN COMPOSITION**
HARZZUSAMMENSETZUNG UND VERFAHREN ZUR HERSTELLUNG DIESER HARZZUSAMMENSETZUNG
COMPOSITION DE RÉSINE ET PROCÉDÉ DE PRODUCTION DE CETTE COMPOSITION DE RÉSINE

(30) Priority: 29.07.2016 JP 2016149369
(43) Date of publication of application: 05.06.2019
(73) Proprietor: Mitsubishi Chemical Corporation, Tokyo 1008251 (JP)
(72) Inventor: MURAMATSU, Yusuke, Tokyo 1008251 (JP); MANDAI, Shusaku, Tokyo 1008251 (JP); YAMAUCHI, Yoshihito, Tokyo 1008251 (JP); SAKA, Takahiro, Tokyo 1008251 (JP)
(74) Representative: Kuhnen & Wacker Patent- und Rechtsanwaltsbüro PartG mbB
(86) International application number: PCT/JP2017/027321
(87) International publication number: WO 2018/021495

(56) References cited:
- EP-A1- 1 085 051
- WO-A1-2011/108152
- WO-A1-2014/192773
- WO-A1-2015/111518
- JP-A- 2007 245 432
- JP-A- 2014 139 000
- JP-A- 2015 137 275
- JP-A- H08 511 053
- JP-A- H09 504 571
- JP-A- S58 102 794
- US-A1- 2009 247 698

## Description

### Technical Field

The present invention relates to a resin composition comprising a polyvinyl alcohol-based resin containing a sulfonic acid or base thereof, and in more detail, to a resin composition suitably used particularly for a dispersant or a coating liquid and a dispersant and a coating liquid for a heat-sensitive color-forming layer which contain the resin composition.

### Background Art

A polyvinyl alcohol-based resin (hereinafter, abbreviated as PVA-based resin) is widely used for a dispersant, an emulsifier, a suspending agent, a fiber processing agent, a paper processing agent, a binder, an adhesive, a film and the like utilizing excellent water-solubility, interfacial properties (dispersibility or protective colloid property), film properties (film-forming property, strength, oil resistance or the like).

Further, utilizing the water-solubility, the PVA-based resin is widely used for a coating liquid for a protective layer or a heat-sensitive recording layer of a heat-sensitive recording medium, and a coating liquid for an ink receiving layer of an ink jet recording medium, as an aqueous coating liquid free from a solvent.

Among these, a PVA-based resin containing sulfonic acid or base thereof has an excellent dispersion performance because of being negatively charged, and is used for various emulsifiers, suspending agents and dispersants.

Moreover, it is also used for a coating liquid for a heat-sensitive color-forming layer of a heat-sensitive recording medium and is suitable as a coating liquid in which a developer and a leuco dye are dispersed.

The heat-sensitive recording medium has, on a support base material, a heat-sensitive color-forming layer formed by applying an aqueous dispersion containing a leuco dye, a developer and a dispersant and drying the same. The leuco dye and the developer are melted by heating to mix with each other, thereby reacting to form color.

For example, in Patent Document 1, it is proposed that a polyvinyl alcohol derivative having a sulfone group is used as a dispersant.

Further, for the purpose of enhancing ultraviolet absorbing properties, for example, in Patent Document 2, it is also proposed to use a PVA-based resin containing an acetoacetyl group and a sulfonic acid group.

Moreover, the Patent Documents 3 to 5 disclose further PVA-based resins according to prior art.

### Prior Art Document

### Patent Document

Patent Document 1: JP-A-58-102794
Patent Document 2: JP-A-2014-139000
Patent Document 3: WO 2015/111518 A1
Patent Document 4: EP 1 085 051 A1
Patent Document 5: US 2009/0247698 A1

### Summary of the Invention

### Problems to Be Solved by the Invention

However, a PVA-based resin containing a sulfonic acid or base thereof has a problem in that yellowing is caused by heating. The problem is not considered at all in Patent Documents 1 and 2, and has not been studied in detail in the past.

Therefore, under this background, an object of the present invention is to provide a resin composition comprising a PVA-based resin containing a sulfonic acid or base thereof in which coloring (yellowing) of the PVA-based resin at a high temperature is suppressed so that coloring (yellowing) of the resin composition is decreased even under a high temperature environment (specifically, 50 to 200°C).

### Means for Solving the Problems

As a result of the intensive investigations in view of these circumstances, the inventors have focused on a chlorine component contained in a PVA-based resin containing a sulfonic acid or base thereof, which has not been focused on so much. Then, the inventors found that yellowing of the PVA-based resin containing sulfonic acid or base thereof can be decreased by reducing the chlorine component more than before, thereby completing the present invention.

That is, the present invention relates to the following (1) to (6).
(1) A resin composition comprising a polyvinyl alcohol-based resin containing sulfonic acid or base thereof (A) and a chlorine component (B), wherein a content of the chlorine component (B) is 0.001 to 0.05 parts by mass in terms of chlorine atom with respect to 100 parts by mass of the polyvinyl alcohol-based resin containing sulfonic acid or base thereof (A).
(2) The resin composition described in (1), wherein a content of a sulfonic acid or base thereof in the polyvinyl alcohol-based resin containing sulfonic acid or base thereof (A) is 0.01 to 10% by mole.
(3) The resin composition described in (1) or (2), wherein the chlorine component (B) is sodium chloride.
(4) A dispersant comprising the resin composition described in any one of (1) to (3).
(5) A coating liquid for a heat-sensitive color-forming layer comprising the resin composition described in any one of (1) to (3), a leuco dye, a developer and water.
(6) A method for producing the resin composition described in any one of (1) to (3), comprising copolymerizing a vinyl ester-based monomer and an unsaturated monomer containing sulfonic acid or base thereof and saponifying the resulting polymer, and further comprising at least one of a step of removing a chlorine component in the unsaturated monomer containing sulfonic acid or base thereof before the saponification and a step of removing a chlorine component in the polyvinyl alcohol-based resin containing sulfonic acid or base thereof (A) after the saponification.

### Effects of the Invention

Since the resin composition of the present invention exhibits a little coloring (yellowing) even at a high temperature, it is useful for a case where whiteness or transparency is required, for example, a coating liquid for a heat-sensitive color-forming layer of a heat-sensitive recording medium as well as a film or a coating film use. For example, it is useful as a dispersant of a developer for a heat-sensitive color-forming layer of a heat-sensitive recording medium.

Since the chlorine component acts as a catalyst for formation of double bond which is a cause of the coloring (yellowing), the resin composition having a small amount of chlorine component is important in order to further suppress the formation of double bond. In the present invention, under the background in which suppression of the coloring at a higher temperature is required, the resin composition exhibiting a little coloring (yellowing) is obtained by reducing the chlorine component more than before, which has not been focused on so much.

### Embodiments for Carrying Out the Invention

Hereinafter, the present invention will be described in detail.

The explanation of the constituent features described below is an example (representative example) of an embodiment of the present invention. The present invention is not limited to these contents.

In the specification, (meth)allyl means allyl or methallyl, (meth)acryl means acryl or methacryl, and (meth)acrylate means acrylate or methacrylate.

Further, in the specification, all percentages and parts represented by mass are the same as percentages and parts represented by weight.

The resin composition of the invention is a resin composition comprising a PVA-based resin containing sulfonic acid or base thereof (A) and a chlorine component (B). First, the PVA-based resin containing sulfonic acid or base thereof (A) is described.

### [PVA-based resin containing sulfonic acid or base thereof (A)]

The PVA-based resin containing sulfonic acid or base thereof (A) used in the invention has a sulfonic acid or base thereof directly or through a bonding chain on a main chain of a PVA-based resin. For example, the sulfonic acid or base thereof is represented by the formula (1) shown below.

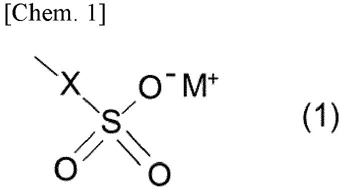

(In the formula (1), X represents a single bond or a bonding chain, M represents a hydrogen atom, an alkali metal or an ammonium group.)

The bonding chain represented by X is not particularly limited as long as it is a divalent connecting group and includes, for example, a hydrocarbon group, for example, a straight-chain or branched alkylene group having 1 to 20 carbon atoms, a straight-chain or branched alkenylene group having 1 to 20 carbon atoms, a straight-chain or branched alkynylene group having 1 to 20 carbon atoms, a phenylene group or a naphthylene group (the hydrocarbon group may be substituted with a halogen, such as fluorine, chlorine or bromine) and, in addition, -O-, -(CH₂O)ₘ-, -(OCH₂)ₘ-, -(CH₂O)ₘCH₂-, -CO-, -COCO-, -CO(CH₂)ₘCO-, -CO(C₆H₄)CO-, -S-, -CS-, -SO-, -SO₂-, -NR-, -CONR-, -NRCO-, -CSNR-, -NRCS-, -NRNR-, -HPO₄-, -Si(OR)₂-, -OSi(OR)₂-, -OSi(OR)₂O-, -Ti(OR)₂-, -OTi(OR)₂-, -OTi(OR)₂O-, -Al(OR)-, -OAl(OR)- and -OAl(OR)O- (R each independently represents an optional substituent and is preferably a hydrogen atom or an alkyl group having 1 to 15 carbon atoms, and m represents an integer of 1 to 5). These bonding chains may be used alone or in combination of two or more thereof. Among these, from the standpoint of stability at the time of production or use, a single bond or a straight-chain or branched alkylene group having 1 to 6 carbon atoms is preferred.

The alkali metal represented by M includes, for example, lithium, sodium, potassium, rubidium and cesium.

The saponification degree (measured in accordance with JIS K 6726) of the PVA-based resin containing sulfonic acid or base thereof (A) of the present invention is preferably 75 to 100% by mole, particularly preferably 80 to 95% by mole, and especially preferably 85 to 90% by mole. When the saponification degree is too low, the water solubility tends to decrease.

The average polymerization degree (measured in accordance with JIS K 6726) of the PVA-based resin containing sulfonic acid or base thereof (A) of the present invention is preferably 100 to 4,000, particularly preferably 150 to 3,000, and especially preferably 200 to 1,500.

When the average polymerization degree is too low, a crack tends to easily occur in the coating film. When the average polymerization degree is too high, workability, such as coating, tends to decrease.

The content of the sulfonic acid or base thereof in the PVA-based resin containing sulfonic acid or base thereof (A) of the present invention is preferably 0.01 to 10% by mole, particularly preferably 0.1 to 7% by mole, and especially preferably 1 to 5% by mole. When the content is too low, the chargeability of the resin tends to decrease or the protective colloid property tends to decrease. When the content is too high, the production tends to become difficult.

A method for producing the PVA-based resin containing sulfonic acid or base thereof (A) of the present invention includes, for example, (1) a method of performing copolymerization of a vinyl ester-based monomer and an unsaturated monomer containing sulfonic acid or base thereof, and then saponification, (2) a method of performing polymerization of a vinyl ester-based monomer in the presence of a compound having a functional group, such as alcohol, aldehyde or thiol, which contains sulfonic acid or base thereof as a chain transfer agent, and then saponification, (3) a method of treating a PVA-based resin with bromine, iodine or the like, and then heating with an aqueous solution of acidic sodium sulfide, (4) a method of heating a PVA-based resin in an aqueous concentrated sulfuric acid solution, and (5) a method of performing acetalization of a PVA-based resin with an aldehyde compound having sulfonic acid or base thereof. In the methods (1) and (2), the content of carboxylic acid can be reduced by washing with an alcohol-based solvent, such as methanol, after the saponification.

Among these, from the standpoint of safety and workability during the production, the obtaining by copolymerizing a vinyl ester-based monomer and an unsaturated monomer containing sulfonic acid or base thereof, and then saponifying the resulting copolymer as in (1) is preferred.

The vinyl ester-based monomer includes, for example, vinyl formate, vinyl acetate, vinyl propionate, vinyl valerate, vinyl butyrate, vinyl isobutyrate, vinyl pivalate, vinyl caprate, vinyl laurate, vinyl stearate, vinyl benzoate and vinyl versatate. Among these, vinyl acetate is preferably used from an economic point of view.

The unsaturated monomer containing sulfonic acid or base thereof includes, for example, (i) olefinsulfonic acid or salt thereof represented by the formula (2) shown below, (ii) sulfoalkyl maleate represented by the formula (3) or (4) shown below, (iii) sulfoalkyl(meth)acrylamide represented by the formula (5), (6) or (7) shown below, and (iv) sulfoalkyl (meth)acrylate represented by the formula (8) shown below.

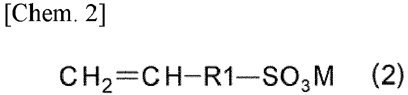

(In the formula (2), R1 represents an alkylene group having 1 to 4 carbon atoms, and M represents a hydrogen atom, an alkali metal or an ammonium group.)

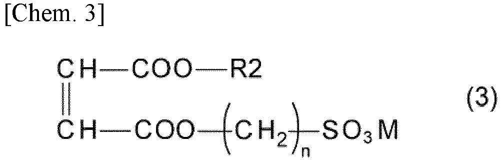

(In the formula (3), R2 represents an alkyl group having 1 to 3 carbon atoms, n represents an integer of 2 to 4, and M represents a hydrogen atom, an alkali metal or an ammonium group.)

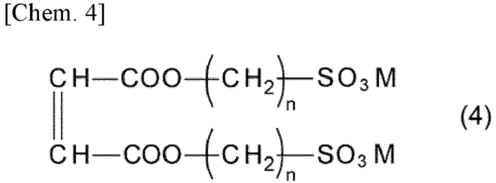

(In the formula (4), n represents an integer of 2 to 4, and M represents a hydrogen atom, an alkali metal or an ammonium group.)

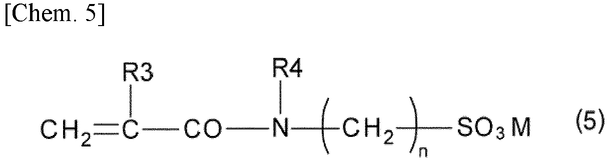

(In the formula (5), R3 and R4 each independently represents a hydrogen atom or an alkyl group having 1 to 3 carbon atoms, n represents an integer of 2 to 4, and M represents a hydrogen atom, an alkali metal or an ammonium group.)

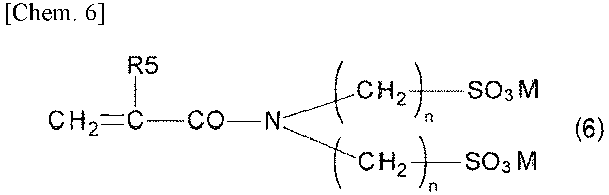

(In the formula (6), R5 represents a hydrogen atom or an alkyl group having 1 to 3 carbon atoms, n represents an integer of 2 to 4, and M represents a hydrogen atom, an alkali metal or an ammonium group.)

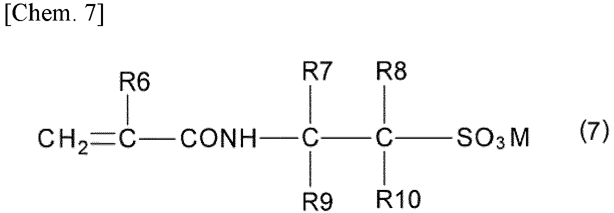

(In the formula (7), R6 represents an alkyl group having 1 to 3 carbon atoms, R7, R8, R9 and R10 each independently represents a hydrogen atom or an alkyl group having 1 to 3 carbon atoms, and M represents a hydrogen atom, an alkali metal or an ammonium group.)

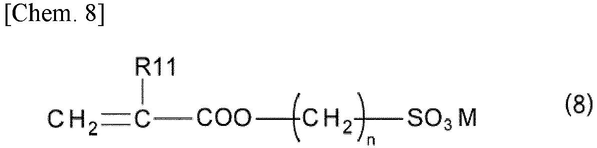

(In the formula (8), R11 represents a hydrogen atom or an alkyl group having 1 to 3 carbon atoms, n represents an integer of 2 to 4, and M represents a hydrogen atom, an alkali metal or an ammonium group.)

Specific examples of the olefinsulfonic acid or salt thereof described above include olefinsulfonic acid or salt thereof, such as vinyl sulfonic acid, allyl sulfonic acid or methallyl sulfonic acid.

Specific examples of the sulfoalkyl maleate described above include, for example, sodium sulfopropyl-2-ethylhexyl maleate, sodium sulfopropyl tridecyl maleate and sodium sulfopropyl eicosyl maleate.

Specific examples of the sulfoalkyl(meth)acrylamide described above include, for example, sodium sulfomethylacrylamide, sodium sulfo-t-butylacrylamide, sodium sulfo-s-butylacrylamide and sodium sulfo-t-butylmethacrylamide.

Specific examples of the sulfoalkyl (meth)acrylate described above include, for example, sodium sulfoethyl acrylate.

In the case of introducing by copolymerization, among the unsaturated monomers containing sulfonic acid or base thereof described above, an olefinsulfonic acid or salt thereof is preferably used.

In the present invention, it is possible to copolymerize a monomer other than the copolymerization components described above approximately in an amount from 0.1 to 10% by mole as long as the object of the present invention is not impaired. The other monomer includes, for example, an α-olefin, such as ethylene, propylene, isobutylene, α-octene, α-dodecene or α-octadecene; unsaturated acid or salt thereof or mono- or dialkyl ester thereof, such as acrylic acid, methacrylic acid, crotonic acid, maleic acid, maleic anhydride or itaconic acid; nitrile, such as acrylonitrile or methacrylonitrile; amide, such as diacetone acrylamide, acrylamide or methacrylamide; alkyl vinyl ether; dimethylallyl vinyl ketone; N-vinyl pyrrolidone; vinyl chloride; vinylidene chloride; polyoxyalkylene (meth)allyl ether, such as polyoxyethylene (meth)allyl ether or polyoxypropylene (meth)allyl ether; polyoxyalkylene (meth)acrylate, such as polyoxyethylene (meth)acrylate or polyoxypropylene (meth)acrylate; polyoxyalkylene (meth)acrylamide, such as polyoxyethylene (meth)acrylamide, polyoxypropylene (meth)acrylamide; polyoxyethylene (1-(meth)acrylamide-1,1-dimethylpropyl) ester; polyoxyethylene vinyl ether; polyoxypropylene vinyl ether; polyoxyethylene allyl amine; polyoxypropylene allylamine; polyoxyethylene vinyl amine; and polyoxypropylene vinyl amine.

Furthermore, the other monomer includes, for example, a cationic group-containing monomer, such as N-acrylamidomethyl trimethylammonium chloride, N-acrylamidoethyl trimethylammonium chloride, N-acrylamidopropyl trimethylammonium chloride, 2-acryloxyethyl trimethylammonium chloride, 2-methacryloxyethyl trimethylammonium chloride, 2-hydroxy-3-methacryloyloxypropyl trimethylammonium chloride, allyl trimethylammonium chloride, methallyl trimethylammonium chloride, 3-butene trimethylammonium chloride, dimethyl diallyl ammonium chloride or diethyl diallyl ammonium chloride; an acetoacetyl group-containing monomer; 3,4-diacetoxy-1-butene; 1,4-diacetoxy-2-butene; ethylene carbonate; vinyl ethylene carbonate; glycerol monoallyl ether; isopropenyl acetate; and 1-methoxyvinyl acetate.

Among these, an α-olefin-vinyl alcohol copolymer obtained by using an α-olefin, such as ethylene, propylene, isobutylene, α-octene, α-dodecene or α-octadecene, as the copolymerization component is preferred in view of improvement in emulsifying property and viscosity stability of an aqueous solution. The content of the α-olefin is preferably form 0.1 to 10% by mole.

The method for copolymerizing a vinyl ester-based monomer and an unsaturated monomer containing sulfonic acid or base thereof is not particularly limited, and a known method, such as bulk polymerization, solution polymerization, suspension polymerization, dispersion polymerization or emulsion polymerization, can be employed, but usually solution polymerization is conducted.

The method for charging the monomer components at the copolymerization is not particularly limited and any method, such as batch charging, divided charging or continuous charging, can be employed.

The solvent used in the copolymerization usually includes a lower alcohol, such as methanol, ethanol, isopropyl alcohol, n-propyl alcohol or butanol, and a ketone, such as acetone or methyl ethyl ketone. An alcohol having 1 to 3 carbon atoms, particularly methanol is preferably used from an industrial point of view.

The amount of the solvent used may be appropriately selected in view of the chain transfer constant of the solvent, depending on the desired polymerization degree of the copolymer. For example, when the solvent is methanol, the amount is selected approximately from the range of S (solvent)/M (monomer) = 0.01 to 10 (mass ratio), preferably 0.05 to 3 (mass ratio).

In the copolymerization, a polymerization catalyst is used. The polymerization catalyst includes, for example, a known radical polymerization catalyst, such as azobisisobutyronitrile, acetyl peroxide, benzoyl peroxide or lauryl peroxide, and a low temperature active radical polymerization catalyst, such as azobisdimethylvaleronitrile or azobismethoxydimethylvaleronitrile. The amount of the polymerization catalyst used varies depending on the kind of the catalyst and cannot be unconditionally determined but is arbitrarily selected according to the polymerization rate. For example, in the case of using azobisisobutyronitrile or acetyl peroxide, the amount is preferably 0.01 to 1.0% by mole, particularly preferably 0.02 to 0.5% by mole, with respect to the vinyl ester-based monomer.

The reaction temperature of the copolymerization reaction is approximately 30°C to a boiling point depending on the solvent used and pressure. More specifically, the reaction is carried out 35 to 150°C, and preferably 40 to 75°C.

The resulting copolymer is then saponified. The saponification is performed by dissolving the resulting copolymer in an alcohol or a hydrous alcohol and using an alkali catalyst or an acid catalyst.

The alcohol includes a lower alcohol, such as methanol, ethanol, propanol or tert-butanol. Among these, an alcohol having 1 to 3 carbon atoms, particularly methanol is preferably used. The concentration of the copolymer in the alcohol is appropriately selected according to the viscosity of the system and is usually selected from the range of 10 to 60% by mass. The catalyst used in the saponification includes, an alkali catalyst, for example, an alkali metal hydroxide or alcoholate, such as sodium hydroxide, potassium hydroxide, sodium methylate, sodium ethylate, potassium methylate or lithium methylate; and an acid catalyst, for example, sulfuric acid, hydrochloric acid, nitric acid, metasulfonic acid, zeolite or a cation-exchange resin.

The amount of the saponification catalyst used may be appropriately selected according to the saponification method, the target saponification degree and the like, and in the case of using an alkali catalyst, the amount used is usually 0.1 to 30 mmol, preferably 2 to 15 mmol with respect to mol of the total amount of the vinyl ester-based monomer and the compound represented by the formulae (2) to (8).

The reaction temperature in the saponification reaction is not particularly limited and is preferably 10 to 60°C, and particularly preferably 20 to 50°C.

Thus, the PVA-based resin containing sulfonic acid or base thereof (A) used in the present invention is obtained.

Next, the resin composition of the invention will be described.

### [Resin composition]

The resin composition of the present invention comprises the PVA-based resin containing sulfonic acid or base thereof (A) and the chlorine component (B). The chlorine component (B) is presumed to be derived from the raw material used in the production of PVA-based resin containing sulfonic acid or base thereof (A). For example, in the case where the PVA-based resin containing sulfonic acid or base thereof (A) is produced by the method (1), which performs copolymerization of a vinyl ester-based monomer and an unsaturated monomer containing sulfonic acid or base thereof and then saponification, it is presumed that chlorine contaminated as an impurity in the unsaturated monomer containing sulfonic acid or base thereof reacts with a saponification catalyst (for example, sodium hydroxide) to form a chloride (for example, sodium chloride), thereby being present in the PVA-based resin containing sulfonic acid or base thereof (A).

Therefore, the chlorine component (B) is present in the resin composition as a chloride, such as sodium chloride (NaCl), potassium chloride (KCl) or magnesium chloride (MgCl₂).

In the resin composition of the present invention, the content of the chlorine component (B) is 0.05 parts by mass or less, in terms of chlorine atom, with respect to 100 parts by mass of the PVA-based resin containing sulfonic acid or base thereof (A). When the content of the chlorine component is too much, the coloring causes. The lower limit is 0.001 part by mass, and preferably 0.005 parts by mass.

Specific content of the chlorine component (B) is 0.001 to 0.05 part by mass in terms of chlorine atom with respect to 100 parts by mass of the PVA-based resin containing sulfonic acid or base thereof (A).

As the method of measuring the chlorine component (B), a method with X-ray fluorescence is used.

As a method for setting the chlorine component (B) in the resin composition to 0.001 to 0.05 parts by mass with respect to 100 parts by mass of the PVA-based resin containing sulfonic acid or base thereof (A), a method comprising copolymerizing a vinyl ester-based monomer and an unsaturated monomer containing sulfonic acid or base thereof and saponifying the resulting polymer, and further comprising at least one of a step of removing the chloride component in the unsaturated monomer containing sulfonic acid or base thereof before the saponification and a step of removing the chloride component in the PVA-based resin containing sulfonic acid or base thereof (A) after the saponification is preferred. Specific examples thereof include (i) a method of removing or reducing the chlorine component in the unsaturated monomer containing sulfonic acid or base thereof (for example, 0.05 parts by weight or less of the chlorine component with respect to 100 parts by weight of the unsaturated monomer) and copolymerizing with the vinyl ester-based monomer, followed by saponification, and (ii) a method of producing the PVA-based resin containing sulfonic acid or base thereof (A) and then removing or reducing the chlorine component in the PVA-based resin containing sulfonic acid or base thereof (A). The method (i) is preferred from the standpoint that the content of the chlorine component is easily controlled.

The method (i) includes, in detail, a method of washing the unsaturated monomer containing sulfonic acid or base thereof with a solvent (for example, water and/or an alcohol) and filtering; a method of concentrating and drying the unsaturated monomer containing sulfonic acid or base thereof synthesized in a solvent and extracting with an alcohol; and a method of washing thea copolymer of the vinyl ester-based monomer and the unsaturated monomer containing sulfonic acid or base thereof before saponification and filtration. Among these, the method of washing the unsaturated monomer containing sulfonic acid or base thereof with a solvent (for example, water and/or an alcohol) and filtering is preferred from the standpoint of purity.

Thus, the resin composition of the present invention is obtained.

The resin composition of the present invention exhibits a little coloring (yellowing) even under a high temperature environment and is effectively used in various applications.

The applications of the resin composition of the present invention include, for example, various kinds of applications as shown in (1) to (10) below.
(1) Molded articles and related products: fibers, films, sheets, pipes, tubes, leak preventing films, tentative coating films, chemical laces, water-soluble fibers, and the like.
(2) Adhesives and related products: adhesives for wood, paper, aluminum foil, plastics, and the like, pressure-sensitive adhesives, remoistening agents, binders for nonwoven fabric, binders for various building materials, for example, plasterboards or fiberboards, binders for various powder granulation, additives for cements and mortars, hot-melt adhesives, pressure-sensitive adhesives and fixing agents for anionic paints, and the like.
(3) Coating agents and related products: clear coating agents for paper, pigment coating agents for paper, internal sizing agents for paper, sizing agents for fiber products, warp sizing agents, fiber processing agents, leather finishing agents, paints, anti-fogging agents, metal corrosion preventing agents, galvanization lustering agents, anti-static agents, electrically conductive agents, tentative paints, and the like.
(4) Hydrophobic resin blending agents and related products: anti-static agents and hydrophilicity-imparting agents for hydrophobic resins, additives for composite fibers, films and other molded articles, and the like.
(5) Suspension/dispersion stabilizing agents and related products: dispersants for a developer in a coating liquid for a heat-sensitive color-forming layer, pigment dispersion stabilizing agents for paints, India inks, aqueous color inks, adhesives, and the like, dispersion stabilizing agents suspension polymerization of various vinyl compounds, such as vinyl chloride, vinylidene chloride, styrene, (meth)acrylate or vinyl acetate, and the like.
(6) Emulsion dispersion stabilizing agents and related products: emulsifying agents for emulsion polymerization of various acrylic monomers, ethylenically unsaturated compounds and butadiene compounds, post-emulsifying agents for polyolefins, polyester resins and other hydrophobic resins, epoxy resins, paraffin and bitumen, and the like.
(7) Thickeners and related products: thickeners for various aqueous solutions, emulsions and oil-well drilling fluids, and the like.
(8) Flocculants and related products: flocculants for aqueous suspensions and dissolved substances, filtration improving agents for pulps and slurries, and the like.
(9) Exchange resins and related products: ion exchange resins, chelate exchange resins, ion exchange membranes, and the like.
(10) Others: soil modifying agents, photosensitive agents, photosensitive resist resins, and the like.

Among these, the resin composition of the present invention is particularly useful as a dispersant for various dispersions and is especially useful as a dispersant for a developer in a coating liquid for a heat-sensitive color-forming layer of a heat-sensitive recording medium.

### [Coating liquid for heat-sensitive color-forming layer]

Next, the coating liquid for a heat-sensitive color-forming layer of the present invention will be described.

The coating liquid for a heat-sensitive color-forming layer of the invention includes the resin composition comprising a PVA-based resin containing sulfonic acid or base thereof (A) and a chlorine component (B), a leuco dye, a developer and water in which the PVA-based resin containing sulfonic acid or base thereof (A) acts as a dispersant to disperse the leuco dye and the developer.

The pH of the coating liquid for a heat-sensitive color-forming layer of the present invention is 6.4 to 8, preferably 6.4 to 7.5, and particularly preferably 6.5 to 7. When the pH of the coating liquid is either too low or too high, the coating liquid tends to increase viscosity. A method for adjusting pH includes, for example, (1) a method of controlling an amount of a carboxylic acid salt formed at the production of the PVA-based resin containing sulfonic acid or base thereof (A) at the time of washing the PVA-based resin containing sulfonic acid or base thereof with a solvent, such as an alcohol, (2) a method of adding a pH adjusting agent to the coating liquid, and (3) a method of adding an alkali to the PVA-based resin containing sulfonic acid or base thereof (A). The method (1) is preferred because it takes less time and is simple to perform.

In the method (1), the content of the carboxylic acid salt is usually 2.5 to 8% by mass, preferably 3 to 5% by mass, in the PVA-based resin containing sulfonic acid or base thereof (A). Usually, the PVA-based resin containing sulfonic acid or base thereof (A) after the completion of the saponification is washed once to several times using a solvent to reduce the amount of the carboxylic acid salt (usually 0.1 to 2.4 % by mass), but in order to set the content of the carboxylic acid salt to 2.5 % by mass or more, for example, a method of decreasing the number of times of washing or omitting the washing or a method of adding a carboxylic acid salt after the washing may be performed.

The carboxylic acid of the carboxylic acid salt includes, for example, formic acid, acetic acid, butyric acid and benzoic acid. The salt thereof, includes, for example, an alkali metal salt and an alkaline earth metal salt. Among these, the carboxylic acid is preferably acetic acid, and the salt is preferably an alkali metal salt, particularly preferably a sodium salt. Specifically, sodium acetate is preferred as the carboxylic acid salt.

As to a method for producing the coating liquid for a heat-sensitive color-forming layer of the present invention, usually, a dispersion containing a leuco dye and a dispersion containing a developer are separately prepared and the both dispersions are mixed to produce the coating liquid.

In order to prepare the dispersion containing a leuco dye or the dispersion containing a developer, the resin composition comprising a PVA-based resin containing sulfonic acid or base thereof (A) and a chlorine component (B) is used as a dispersant to disperse the leuco dye or the developer. The present invention is not limited to the case where the resin composition of the present invention is used as the dispersant in both the dispersion containing a leuco dye and the dispersion containing a developer. The resin composition of the present invention can be used as the dispersant in at least one of the dispersions. In this case, it is preferred to use the resin composition of the present invention in at least the dispersion containing a developer.

The amount of the resin composition of the invention used is not particularly limited and is usually 1 to 40 parts by mass, particularly 1 to 10 parts by mass, more preferably 1 to 5% by mass, with respect to 100 parts by mass of the developer. When the amount used is too small, dispersion failure tends to occur. When the amount used is too large, foaming of the coating liquid tends to increase.

The dispersion containing a leuco dye and the dispersion containing a developer can be prepared by dispersing using a known dispersing machine, for example, a sand grinder, an attritor, a beads mill, a ball mill, a sand mill, a visco mill, a three-roll mill, an extruder, a kneader or a homogenizer. The dispersion particle diameter of the dispersion containing a leuco dye or the dispersion containing a developer is usually 0.1 to 10 µm, preferably 0.2 to 2 µm, and more preferably 0.3 to 1 µm. When the dispersion particle diameter is too large, decrease in resolution or color-formation failure tends to occur. When the dispersion particle diameter is too small, decrease in color formation of background or image density or color-formation failure tends to occur. The dispersion particle diameter can be appropriately adjusted according to the dispersion conditions, for example, dispersion time.

The solid content concentration in the coating liquid after mixing with the dispersion containing a leuco dye and the dispersion containing a developer is usually 20 to 70% by mass, preferably 30 to 60% by mass, and more preferably 40 to 50% by mass. When the solid content is too small, the image tends to become unclear. When the solid content is too large, coating failure tends to occur.

The coating liquid for a heat-sensitive color-forming layer of the invention may further contain an auxiliary additive component, for example, a filler, a surfactant, a heat-soluble substance (or a lubricant) or a pressure-coloration inhibitor, if desired.

### Example

In the examples, "%" and "parts" mean mass basis.

### Example 1 - not part of the invention

### [Production of unsaturated monomer containing sulfonic acid or base thereof]

Sodium allylsulfonate was produced as the unsaturated monomer containing sulfonic acid or base thereof according to a conventional method, washed with a mixed solvent of water/alcohol (mixing ratio of 5/5) and hot-filtered (temperature: 50°C) to obtain sodium allylsulfonate 1. The content of chlorine in the sodium allylsulfonate 1 was measured with X ray fluorescence. As a result, it was found that the content of chlorine was 0.16 parts in 62 parts of the sodium allylsulfonate 1.

### [Production of resin composition 1]

Into a reaction vessel equipped with a condenser, a dropping funnel and a stirrer were charged 1,000 pars of vinyl acetate, 422 parts of methanol and 62 parts of the sodium allylsulfonate 1 obtained above, 1.4 parts of azobisisobutyronitrile was added thereto, and the temperature was raised with stirring under a stream of nitrogen to perform polymerization with refluxing.

During the polymerization, each 1.4 parts of azobisisobutyronitrile was added four times, and when a polymerization rate of vinyl acetate reached to 96.4% of the total charging amount of the vinyl acetate monomer, 0.1 part of m-dinitrobenzene was added to complete the polymerization, thereby obtaining a copolymer of vinyl acetate and sodium allylsulfonate. Subsequently, the unreacted vinyl acetate monomer was discharged out of the system by a method of blowing methanol vapor to obtain a methanol solution of the copolymer.

Then, the methanol solution thus-obtained was diluted with methanol to adjust the solid content concentration of the methanol solution of the copolymer of vinyl acetate and the sodium allylsulfonate 1 to 55%, charged into a kneader, and while maintaining the solution temperature at 35°C, a methanol solution of sodium hydroxide (concentration of sodium being 2% of the total methanol solution of sodium hydroxide) was added in a proportion of 8 mmol per mole of the vinyl acetate structural unit of the copolymer to perform saponification. The saponified product was precipitated with the progress of the saponification and when particulate product was formed, the product was collected by filtered, washed with methanol and dried in a hot air drier to obtain resin composition 1 comprising a PVA-based resin containing sulfonic acid or base thereof and a chlorine component.

The content of the chlorine component was 0.092 parts in terms of chlorine atom with respect to 100 parts of the PVA-based resin containing sulfonic acid or base thereof.

The degree of saponification of the PVA-based resin containing sulfonic acid or base thereof obtained was determined by performing analysis of the alkali consumption amount required for hydrolysis of the remaining vinyl acetate unit and it was found to be 87.3% by mole. The average polymerization degree was measured in accordance with JIS K 6726 and it was found to be 200. The content of sulfonic acid or base thereof in the PVA-based resin containing sulfonic acid or base thereof (modification rate) was calculated from the NMR measurement and it was found to be 2.7% by mole.

### [Coloring evaluation]

A 10% aqueous solution of the resin composition 1 obtained above was cast into a mold so as to have a film thickness of 100 µm and dried under the conditions of 23°C and 50% RH for 3 days to produce a cast film. The resulting cast film was subjected to heat treatment at 150°C for 5 hours and then the YI value thereof was measured according to the transmission method using a spectrophotometer CM-2600d (manufactured by Konica Minolta Sensing, Inc.). The results are shown in Table 1.

### Example 2

### [Production of resin composition 2]

Into a reaction vessel equipped with a condenser, a dropping funnel and a stirrer were charged 1,000 pars of vinyl acetate, 422 parts of methanol and 116 parts of the sodium allylsulfonate 1 obtained above, 1.4 parts of azobisisobutyronitrile was added thereto, and the temperature was raised with stirring under a stream of nitrogen to perform polymerization with refluxing.

During the polymerization, each 1.4 parts of azobisisobutyronitrile was added four times, and when a polymerization rate of vinyl acetate reached to 96.4% of the total charging amount of the vinyl acetate monomer, 0.1 part of m-dinitrobenzene was added to complete the polymerization, thereby obtaining a copolymer of vinyl acetate and the sodium allylsulfonate 1. Subsequently, the unreacted vinyl acetate monomer was discharged out of the system by a method of blowing methanol vapor to obtain a methanol solution of the copolymer.

Then, the methanol solution thus-obtained was diluted with methanol to adjust the solid content concentration of the methanol solution of the copolymer of vinyl acetate and the sodium allylsulfonate 1 to 55%, charged into a kneader, and while maintaining the solution temperature at 35°C, a methanol solution of sodium hydroxide (concentration of sodium being 2% of the total methanol solution of sodium hydroxide) was added in a proportion of 8 mmol per mole of the vinyl acetate structural unit of the copolymer to perform saponification. The saponified product was precipitated with the progress of the saponification and when particulate product was formed, the product was collected by filtration, washed with methanol, further collected by filtration, washed with methanol, and dried in a hot air drier to obtain a resin composition comprising a PVA-based resin containing sulfonic acid or base thereof and a chlorine component.

The content of the chlorine component was 0.005 parts in terms of chlorine atom with respect to 100 parts of the PVA-based resin containing sulfonic acid or base thereof.

The degree of saponification of the PVA-based resin containing sulfonic acid or base thereof obtained was determined by performing analysis of the alkali consumption amount required for hydrolysis of the remaining vinyl acetate unit and it was found to be 86.5% by mole. The average polymerization degree was measured in accordance with JIS K 6726 and it was found to be 200. The content of sulfonic acid or base thereof in the PVA-based resin containing sulfonic acid or base thereof (modification rate) was calculated from the NMR measurement and it was found to be 3.9% by mole.

Resin composition 2 obtained above was evaluated in the same manner as in Example 1. The results are shown in Table 1.

### Comparative Example 1

Resin composition 3 was obtained in the same manner as in Example 1 except for using 62 pars of sodium allylsulfonate 3 containing 0.28 parts of chlorine component in place of the sodium allylsulfonate 1, and the resin composition 3 obtained was evaluated in the same manner as in Example 1.

The content of the chlorine component of the resin composition 3 obtained was 0.241 parts in terms of chlorine atom with respect to 100 parts of the PVA-based resin containing sulfonic acid or base thereof.

### Comparative Example 2

Resin composition 4 was obtained in the same manner as in Example 1 except for using 62 pars of sodium allylsulfonate 4 containing 0.31 parts of chlorine component in place of the sodium allylsulfonate 1, and the resin composition 4 obtained was evaluated in the same manner as in Example 1.

The content of the chlorine component of the resin composition 4 obtained was 0.225 parts in terms of chlorine atom with respect to 100 parts of the PVA-based resin containing sulfonic acid or base thereof.

### Reference Example 1

The coloring evaluation was performed in the same manner as in Example 1 except for using resin composition 5 comprising unmodified PVA (saponification degree: 88% by mole, polymerization degree: 300), in place of the resin composition 1, and a chlorine component. The results are shown in Table 1.

The content of the chlorine component of the resin composition 5 obtained was 0.062 parts in terms of chlorine atom with respect to 100 parts of the PVA.

### Reference Example 2

The coloring evaluation was performed in the same manner as in Example 1 except for using resin composition 6 including unmodified PVA (saponification degree: 88% by mole, polymerization degree: 300), in place of the resin composition 1, and a chlorine component. The results are shown in Table 1.

The content of the chlorine component of the resin composition 6 obtained was 0.207 parts in terms of chlorine atom with respect to 100 parts of the PVA.

### [Table 1]

**TABLE 1**

| | PVA-based Resin | | | | Chlorine | Coloring Evaluation (150°C, 5 hours) |
|---|---|---|---|---|---|---|
| | Modification | Modification Rate (% by mole) | Saponification Degree (% by mole) | Average Polymerization Degree | Content (parts) | YI Value |
| Example 1 (not part of the invention) | Base of Sulfonic Acid | 2.7 | 87.3 | 200 | 0.092 | 36.8 |
| Example 2 | Base of Sulfonic Acid | 3.9 | 86.5 | 200 | 0.005 | 19.5 |
| Comparative Example 1 | Base of Sulfonic Acid | 2.7 | 87.3 | 200 | 0.241 | 41.2 |
| Comparative Example 2 | Base of Sulfonic Acid | 2.7 | 87.3 | 200 | 0.225 | 44.0 |
| Reference Example 1 | Unmodified | 0 | 88 | 300 | 0.062 | 13.6 |
| Reference Example 2 | Unmodified | 0 | 88 | 300 | 0.207 | 11.7 |

From the results shown in Table 1 above, it is apparent that the resin compositions of Example 1 (not part of the invention) and Example 2 have the low YI values and exhibit a little yellowing. In contrast, Comparative Examples 1 and 2 having the high content of chlorine exhibit a large yellowing at a high temperature.

With respect to the unmodified PVA, the content of choline did not affect coloring.

### Industrial Applicability

Since the resin composition of the present invention exhibits a little coloring (yellowing), the resin composition is useful for various coatings or a dispersant for a dispersion, and particularly useful for a dispersant of a developer in a coating liquid for a heat-sensitive color-forming layer of a heat-sensitive recording medium.

## Claims

1. A resin composition comprising a polyvinyl alcohol-based resin containing sulfonic acid or base thereof (A) and a chlorine component (B), wherein a content of the chlorine component (B) is 0.001 to 0.05 parts by mass in terms of chlorine atom with respect to 100 parts by mass of the polyvinyl alcohol-based resin containing sulfonic acid or base thereof (A).

2. The resin composition according to Claim 1, wherein a content of a sulfonic acid or base thereof in the polyvinyl alcohol-based resin containing sulfonic acid or base thereof (A) is 0.01 to 10% by mole.

3. The resin composition according to Claim 1 or 2, wherein the chlorine component (B) is sodium chloride.

4. A dispersant comprising the resin composition according to any one of Claims 1 to 3.

5. A coating liquid for a heat-sensitive color-forming layer comprising the resin composition according to any one of Claims 1 to 3, a leuco dye, a developer and water.

6. A method for producing the resin composition according to any one of Claims 1 to 3, comprising copolymerizing a vinyl ester-based monomer and an unsaturated monomer containing sulfonic acid or base thereof and saponifying the resulting polymer, and further comprising at least one of a step of removing a chlorine component in the unsaturated monomer containing sulfonic acid or base thereof before the saponification and a step of removing a chlorine component in the polyvinyl alcohol-based resin containing sulfonic acid or base thereof (A) after the saponification.

## Patentansprüche

1. Harzzusammensetzung, umfassend ein Harz auf Polyvinylalkoholbasis, das Sulfonsäure oder eine Base davon (A) enthält, und eine Chlorkomponente (B), wobei ein Gehalt der Chlorkomponente (B) 0,001 bis 0,05 Massenteile in Bezug auf das Chloratom, bezogen auf 100 Massenteile des Harzes auf Polyvinylalkoholbasis, das Sulfonsäure oder eine Base davon (A) enthält, beträgt.

2. Harzzusammensetzung nach Anspruch 1, wobei ein Gehalt einer Sulfonsäure oder einer Base davon in dem Sulfonsäure oder eine Base davon enthaltenden Harz auf Polyvinylalkoholbasis (A) 0,01 bis 10 Mol-% beträgt.

3. Harzzusammensetzung nach Anspruch 1 oder 2, wobei die Chlorkomponente (B) Natriumchlorid ist.

4. Dispergiermittel, umfassend die Harzzusammensetzung nach einem der Ansprüche 1 bis 3.

5. Beschichtungsflüssigkeit für eine wärmeempfindliche, farbbildende Schicht, umfassend die Harzzusammensetzung nach einem der Ansprüche 1 bis 3, einen Leukofarbstoff, einen Entwickler und Wasser.

6. Verfahren zur Herstellung der Harzzusammensetzung nach einem der Ansprüche 1 bis 3, umfassend Copolymerisieren eines Monomers auf Vinylesterbasis und eines ungesättigten Monomers, das Sulfonsäure oder eine Base davon enthält, und Verseifen des resultierenden Polymers, und ferner umfassend mindestens einen Schritt des Entfernens einer Chlorkomponente in dem ungesättigten Monomer, das Sulfonsäure oder eine Base davon enthält, vor dem Verseifen und einen Schritt des Entfernens einer Chlorkomponente in dem Harz auf Polyvinylalkoholbasis, das Sulfonsäure oder eine Base davon enthält (A), nach der Verseifung.

## Revendications

1. Composition de résine comprenant une résine à base d'alcool polyvinylique contenant de l'acide sulfonique ou une base de celui-ci (A) et un composant chloré (B), dans laquelle la teneur du composant chloré (B) est comprise de 0,001 à 0,05 partie en masse en termes d'atomes de chlore par rapport à 100 parties en masse de la résine à base d'alcool polyvinylique contenant de l'acide sulfonique ou une base de celui-ci (A).

2. La composition de résine selon la revendication 1, dans laquelle la teneur en acide sulfonique ou une base de celui-ci dans la résine à base d'alcool polyvinylique contenant de l'acide sulfonique ou une base de celui-ci (A) est comprise de 0,01 à 10 % en mole.

3. La composition de résine selon la revendication 1 ou 2, dans laquelle le composant chloré (B) est chlorure de sodium.

4. Dispersant comprenant la composition de résine selon l'une des revendications 1 à 3.

5. Liquide de revêtement pour une couche colorante thermosensible comprenant la composition de résine selon l'une des revendications 1 à 3, un colorant leuco, un révélateur et de l'eau.

6. Procédé de fabrication de la composition de résine selon l'une des revendications 1 à 3, comprenant copolymériser un monomère à base d'ester vinylique et un monomère insaturé contenant de l'acide sulfonique ou une base de celui-ci et saponifier le polymère obtenu, et comprenant en outre au moins l'une des étapes suivantes : élimination d'un composant chloré dans le monomère insaturé contenant de l'acide sulfonique ou une base de celui-ci avant la saponification et élimination d'un composant chloré dans la résine à base d'alcool polyvinylique contenant de l'acide sulfonique ou une base de celui-ci (A) après la saponification.
